# EUROPÄISCHE PATENTANMELDUNG

(11) **EP 2 382 942 A1**
(43) Veröffentlichungstag der Anmeldung: **02.11.2011**
(21) Anmeldenummer: 10004572.3
(22) Anmeldetag: 30.04.2010
(51) Int. Cl.: A61C 8/00

(54) **Dentalimplantat und Implantatsystem**

(71) Anmelder: Nanolize GmbH, 69493 Hirschberg (DE)
(72) Erfinder: Die Erfindernennung liegt noch nicht vor
(74) Vertreter: Tergau & Walkenhorst

(57) **Zusammenfassung**

Ein Dentalimplantat (2) mit einem Grundkörper (8), der aus einem ersten Material gefertigt ist, soll für eine hohe Stabilität und Langlebigkeit ausgelegt sein. Dazu umfasst das Dentalimplantat (2) erfindungsgemäß einen fest mit dem Grundkörper (8) verbundenen, zur Aufnahme eines zugehörigen Aufbauteils vorgesehenen Kern (20), der aus einem vom ersten Material verschiedenen zweiten Material besteht.

## Beschreibung

Die Erfindung betrifft ein Dentalimplantat mit einem Grundkörper, der aus einem ersten Material gefertigt ist, sowie ein entsprechendes Implantatsystem.

Dentalimplantate sind in vielfältigen Formen bekannt. Sie werden üblicherweise anstelle eines extrahierten oder ausgefallenen Zahnes in den Kieferknochen eingesetzt, um dort nach einer Einheilphase von drei bis vier Monaten ein als Zahnersatz dienendes prothetisches Teil oder eine Krone zu halten. Dazu ist ein derartiges Dentalimplantat üblicherweise als geeignet geformter Metallkörper ausgebildet, wobei das Dentalimplantat üblicherweise durch Einschrauben an der vorgesehenen Stelle in den Kieferknochen eingesetzt wird. Das Dentalimplantat weist dabei in der Regel am apikalen Ende ein zumeist selbstschneidendes Schraubengewinde auf, mit welchem das Dentalimplantat in das entsprechend präparierte Implantatbett eingesetzt wird.

Implantatsysteme sind üblicherweise grundsätzlich zweiteilig aufgebaut und umfassen ein zur Einbringung in den Kieferknochen vorgesehenes Dentalimplantat und ein zugeordnetes Aufbauteil, an das das als Prothese oder dergleichen vorgesehene Zahnersatzstück anbringbar ist. Das Dentalimplantat bzw. Pfostenteil und ebenso das Kopf- oder Aufbauteil bestehen üblicherweise aus Metall oder einer Keramik, und zwar insbesondere aus Titan, Zirkon, einer Titanlegierung, Zirkonlegierung, einer titanhaltigen Legierung, einer zirkonhaltigen Legierung, einer Zirkonoxid-Aluminiumoxid-Keramik oder einer Keramik, die entweder Zirkonoxid oder Aluminiumoxid beinhaltet oder mindestens eine der Keramiken als Hauptbestandteil aufweist.

Darüber hinaus können Keramiken eingesetzt werden, die auf Silizium- oder Siliziumoxidbasis aufgebaut sind und z.B. Beimischungen von Stickstoff, Wasserstoff, Kohlenstoff oder Wolfram beinhalten. Das Dentalimplantat ist an seiner Außenseite üblicherweise mit einem Gewinde versehen, welches als selbstschneidendes oder auch als nicht selbstschneidendes Gewinde ausgeführt sein kann. Das Dentalimplantat wird üblicherweise in einem entsprechend aufbereiteten Implantatbett des Kieferknochens verankert. Die Konstruktion des im Außenbereich des Dentalimplantats vorgesehenen Gewindes ist dabei üblicherweise für eine hohe Primärstabilität der Anordnung und eine gleichmäßige Weiterleitung der bei der Kaubelastung des Dentalimplantats auftretenden Kräfte in den Kieferknochen ausgelegt.

Das Aufbauteil, das üblicherweise an seinem oberen Bereich mit einer Krone, einer anderen prothetischen Versorgung oder dergleichen in an sich bekannter Weise ausgestattet wird, ist üblicherweise über eine geeignet gewählte Verbindungsschraube mit dem Dentalimplantat verschraubt. Bei der Einbringung wird dabei üblicherweise das Gewinde der Verbindungsschraube in ein zugeordnetes Innengewinde des Dentalimplantats eingeschraubt. Der Schraubenkopf der Verbindungsschraube presst dabei beim Einschrauben über eine Stirnsenkung des Aufbauteils dieses auf das Dentalimplantat. Das Aufbauteil kann aber auch in das Dentalimplantat eingepresst werden und lediglich über eine Verklemmung fixiert werden, oder durch eine Zementiereung / Verklebung fixiert werden.

Bei derartigen Dentalimplantaten wird das Dentalimplantat beim Einschrauben des Aufbauteils und insbesondere später bei Kauvorgängen stark belastet. Als nachteilig bei herkömmlichen Dentalimplantaten hat sich herausgestellt, dass durch wiederkehrende Belastungen das Material des Dentalimplantats spröde bzw. brüchig wird. Dies hat neben unerwünschten Auswirkungen auf den Implantatträger die Folge, dass das brüchig gewordene Implantat durch ein neues Implantat ersetzt werden muss.

Der Erfindung liegt daher die Aufgabe zugrunde, ein Dentalimplantat bereitzustellen, das sich durch eine hohe Stabilität und Langlebigkeit auszeichnet. Weiterhin soll ein entsprechendes Implantatsystem bereitgestellt werden.

In Bezug auf das Dentalimplantat wird diese Aufgabe erfindungsgemäß gelöst durch einen fest mit dem Grundkörper verbundenen, zur Aufnahme eines zugehörigen Aufbauteils vorgesehenen Kern, der aus einem vom ersten Material verschiedenen zweiten Material besteht.

Vorteilhafte Ausgestaltungen der Erfindung sind Gegenstand der Unteransprüche.

Die Erfindung geht von der Überlegung aus, dass bei Dentalimplantaten, die auch als Pfostenteile bezeichnet werden können, besonders große materialtechnische Anforderungen an die Verbindung zwischen dem in die Formausnehmung des Grundkörpers eingesetzten Aufbauteil und dem Grundkörper gestellt werden. Durch Tätigkeiten wie beispielsweise Kauvorgänge wird von dem Aufbauteil Druck auf den Grundkörper ausgeübt und übertragen. Der Grundkörper ist somit insbesondere im Bereich der Verbindungstelle spontanen und auch dauerhaften Belastungen bzw. Überbelastungen ausgesetzt und kann im Laufe der Zeit brüchig und spröde werden. Eine derartige Belastung des Grundkörpers sollte demnach möglichst stark reduziert werden.

Wie nunmehr erkannt wurde, lässt sich dieser Belastungsstress reduzieren, wenn das Aufbauteil und der Grundkörper in der Formausnehmung nicht direkt miteinander in Kontakt stehen. Durch einen zwischengelagerten Kern, der gewissermaßen als Adapter oder Zwischenstück zwischen Grundkörper und Aufbauteil fungiert, kann bei geeigneter Materialwahl ein Stressabbauer bzw. Stressabsorber realisiert werden. Durch den mehrkomponentigen Aufbau des Dentalimplantats werden mechanische Belastungen überwiegend in den Kern abgeleitet und von diesem aufgenommen. Das Material des Kerns kann spezifisch für eine derartige Aufgabe ausgewählt sein, während der Grundkörper in bewährter Weise aus einem Material bestehen kann, das im Hinblick auf die gewünschte Verankerung im umliegenden Kiefergewebe optimiert ist. Dabei wird der Grundkörper durch die Nachgiebigkeit des zwischengelagerten Kerns bei über das Aufbauteil eingeleiteten Belastungen weniger strapaziert, wodurch seine Lebenszeit signifikant erhöht wird und Brüche oder Risse infolge von Materialsprödigkeit verhindert werden.

Vorteilhafterweise weist das zweite Material einen im Vergleich zum ersten Material geringeren Elastizitätsmodul auf. Der geringere Elastizitätsmodul erlaubt die

Absorption von auf das Aufbauteil wirkenden Kräften im Kern und führt zu einer Reduzierung der Materialbelastung des Grundkörpers. Ein ergänzendes oder alternatives Kriterium für die Materialwahl kann darin bestehen, dass das Material des Kerns eine größere Zähigkeit und/oder Duktilität aufweist als das Material des Grundkörpers. Der Kern kann sich dann bei temporärer Überbelastung bedarfsweise in einem größeren Maße elastisch oder auch plastisch verformen, bevor Spannungsrisse auftreten.

In einer bevorzugten Ausführungsform weist der Grundkörper eine Formausnehmung zur Aufnahme des Kerns auf, wobei der Kern in Form bzw. nach Art eines Adapters einen Aufnahmekanal für ein Aufbauteil bildet. Der Kern ist also räumlich zwischen Grundkörper und Aufbauteil angeordnet und umgibt nach Art einer Hülse das Aufbauteil, so dass Aufbauteil und Grundkörper nicht direkt in Kontakt stehen, Dadurch wird gewährleistet, dass der Kern bei Kräften aus unterschiedlichen Richtungen stets seine druckabsorbierende Wirkung ausüben kann.

Das zweite Material, also das Material des Kerns, zeichnet sich vorteilhafterweise durch Metallfreiheit aus. Vorzugsweise wird für das zweite Material ein hochbelastbarer thermoplastischer Kunststoff aus der Gruppe der Polyetherketone verwendet, insbesondere Polyetheretherketon, auch als PEEK bekannt. Derartige Materialien zeichnen sich durch ihre hervorragende Biokompatibiltät aus und ermöglichen eine bakterienresistente und insbesondere stoffschlüssige Verbindung zwischen Kern und Grundkörper. Für das erste Material des Grundkörpers wird vorteilhafterweise Zirkon verwendet, jedenfalls als Hauptbestandteil, wodurch ein metallfreier Grundkörper bereitgestellt wird. Alternativ dazu können auch Zirkonium, Zirkoniumoxid, Keramik, oder Titan verwendet werden. Diese Materialien können auch miteinander kombiniert werden.

Für die dauerhafte Verbindung zwischen Kern und Grundkörper eignen sich unterschiedliche Techniken. Der Kern kann mit dem Grundkörper beispielsweise verklebt und/oder verpresst sein. Er kann auch durch ein Spritzgussverfahren an den Grundkörper angespritzt oder in ihn eingespritzt sein. Vorteilhafterweise sind das erste und das zweite Material derart gewählt, dass das Dentalimplantat vollständig metallfrei ist.

In Bezug auf das Implantatsystem wird die eingangs genannte Aufgabe gelöst, indem dieses ein Dentalimplantat der oben beschriebenen Art aufweist. Durch die Verwendung eines derartigen Dentalimplantats wird ein Implantatsystem bereitgestellt, das eine hohe Lebenszeit aufweist, da Überbelastungen und damit verbundene Materialschäden konsequent reduziert werden. Vorteilhafterweise ist das Implantatsystem vollständig metallfrei, d.h., Grundkörper, Kern und Aufbauteil sind alle aus metallfreiem Material gefertigt, wodurch sich eine besonders gute Verträglichkeit für den Implantatträger ergibt.

Die Vorteile der Erfindung liegen insbesondere darin, dass durch einen in das Dentalimplantat integrierten Kern, der aus einem von dem Grundkörpermaterial des Dentalimplantats verschiedenen Material besteht, der vom Kaudruck verursachte Belastungsstress im Grundkörper des Implantats reduziert wird. Insbesondere durch einen aus PEEK bestehenden Kern kann eine biokompatible und baktierendichte, kraftschlüssige und/oder stoffschlüssige Verbindung zwischen den Werkstoffen bzw. Materialen von Grundkörper und Aufbauteil realisiert werden.

Die Erfindung wird nachfolgend anhand einer Zeichnung näher erläutert. Darin zeigen in stark schematisierter Darstellung:
Fig. 1 ein Dentalimplantat mit (jeweils in separater Darstellung) einem Grundkörper mit einer Formausnehmung und mit einem in das Dentalimplantat einzusetzenden Kern in perspektivischer Darstellung,
Fig. 2 das Dentalimplantat aus Fig. 1 mit in der Formausnehmung platziertem Kern,

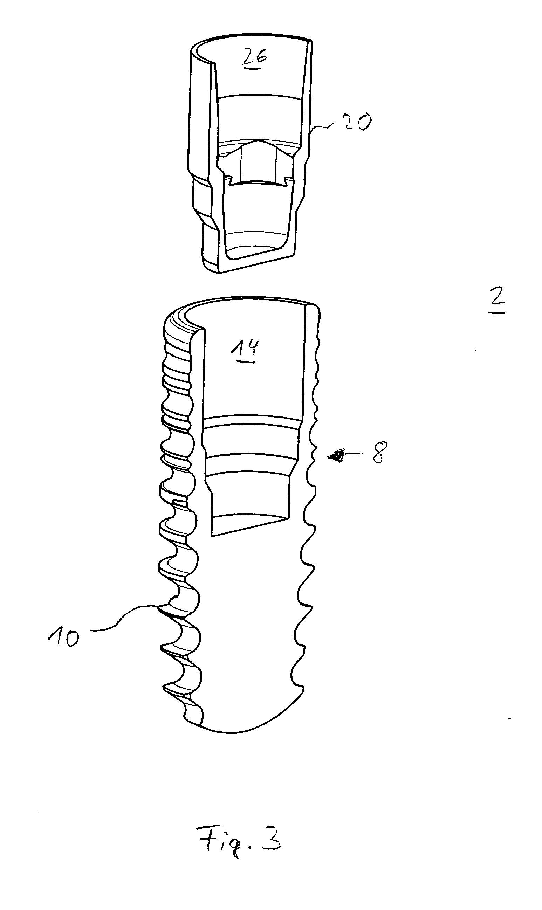

Fig. 3 das Dentalimplantat aus Fig. 1 in teilgeschnittener perspektivischer Darstellung,

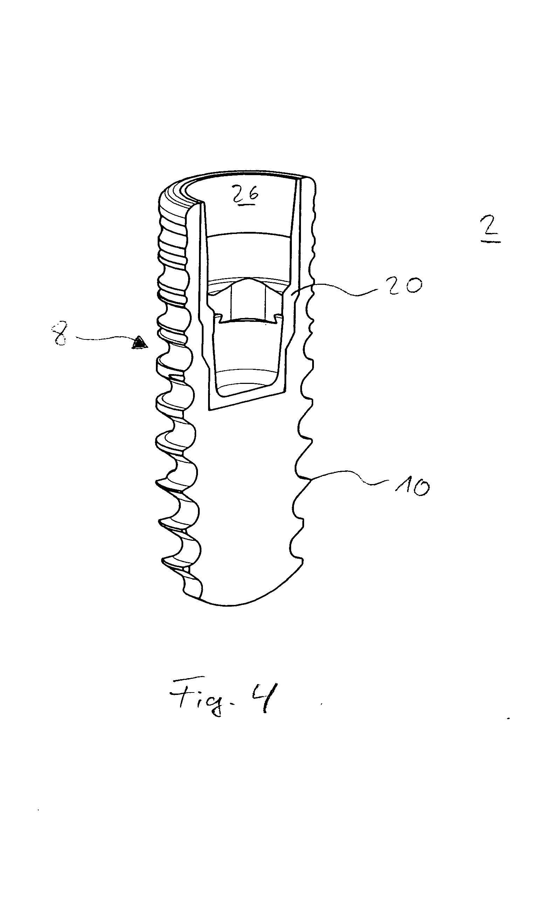

Fig. 4 das Dentalimplantat aus Fig. 3 in teilgeschnittener perspektivischer Darstellung,

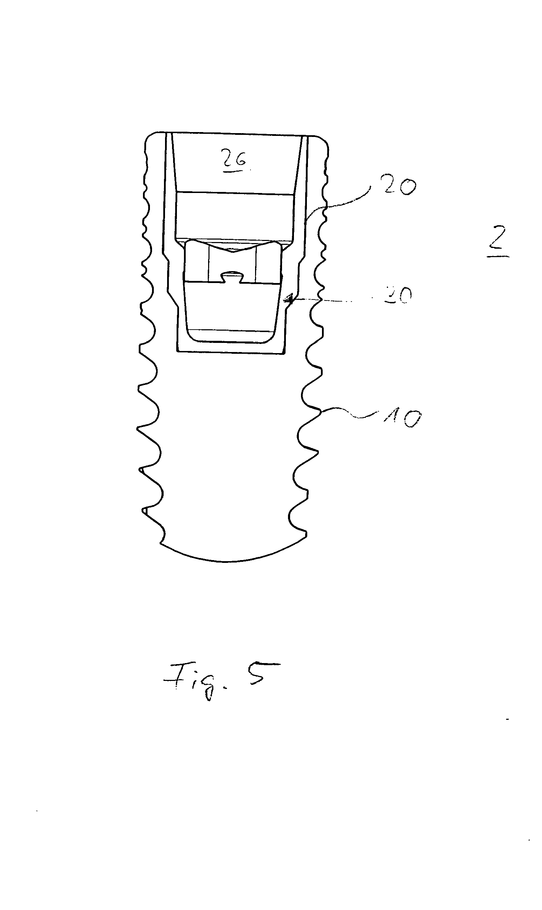

Fig. 5 das Dentalimplantat aus Fig. 2 in einem Längsschnitt,

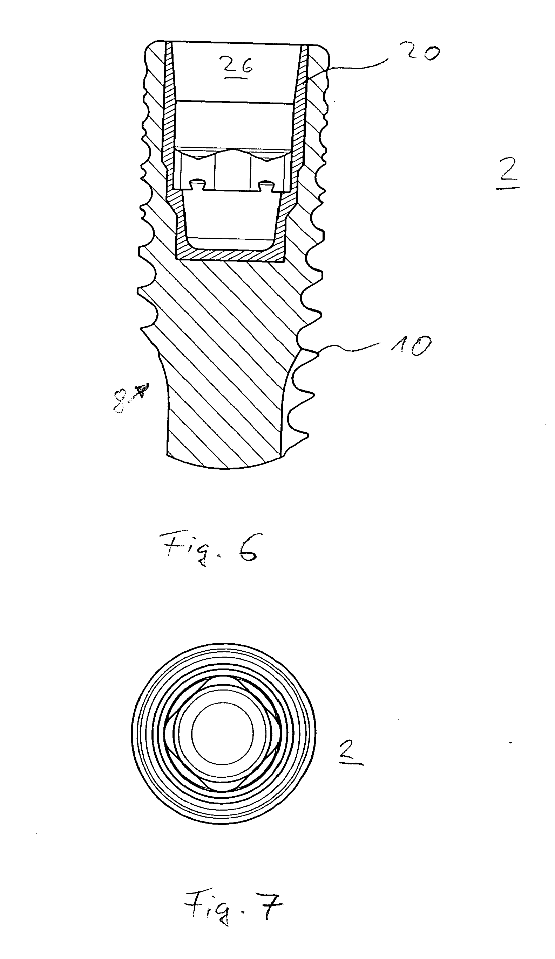

Fig. 6 das Dentalimplantat aus Fig. 2 in einem weiteren Längsschnitt, und
Fig. 7 eine Draufsicht auf das Dentalimplantat gemäß Fig. 2.

Gleiche Teile sind in allen Figuren mit denselben Bezugszeichen versehen.

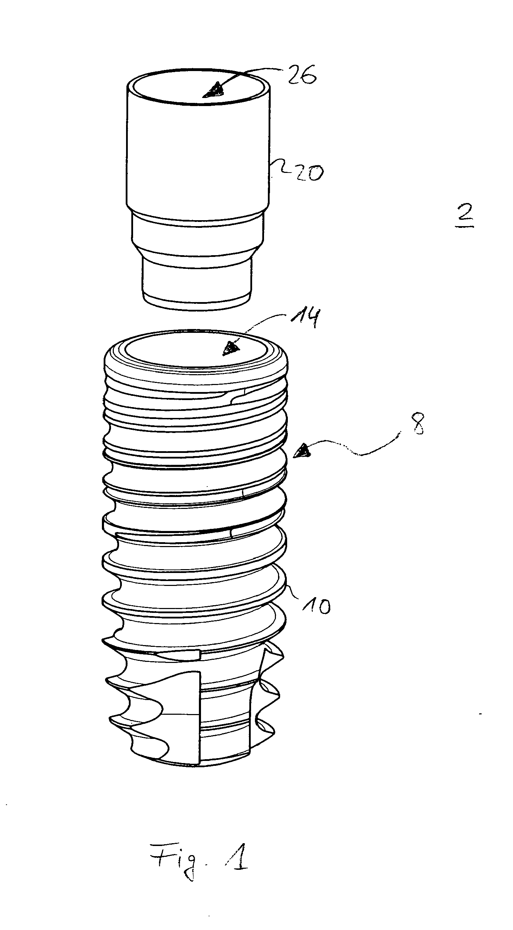

Das in Fig. 1 dargestellte Dentalimplantat 2 umfasst einen Grundkörper 8 mit einem als Außengewinde ausgeführten Gewinde 10. Das Gewinde 10 ist als selbstschneidendes Schraubengewinde ausgeführt. Die Einbringung des Dentalimplantats 2 in den Kiefer erfolgt durch Einschrauben. Der Grundkörper 8 des Dentalimplantats 2 ist aus Zirkon gefertigt, wobei auch andere Materialien, die üblicherweise bei Dentalimplantaten eingesetzt werden, Verwendung finden können. Der Grundkörper 8 weist eine - bei Einsetzung im Kiefer der Mundhöhle zugewandte - Formausnehmung 14 auf.

Das in Fig. 1 dargestellte Dentalimplantat 2 ist zur Reduzierung von druckähnlichen Belastungen auf den Grundkörper 8 ausgelegt, die beispielsweise bei Kauvorgängen auftreten und einen mit der Zeit spröde und/oder brüchig werdenden Grundkörper 8 zur Folge haben. Dazu wird in die Formausnehmung 14 ein Kern 20 aufgenommen (dieser ist in Fig. 1 separat dargestellt). Der Kern 20 wiederum bildet einen Aufnahmekanal 26 für das Aufbauteil (nicht dargestellt) eines Implantatsystems. Im Gegensatz zu herkömmlichen Implantaten nimmt die Formausnehmung 14 also nicht direkt ein Aufbauteil auf. Vielmehr wird in sie der Kern 20 eingesetzt, welcher wiederum das Aufbauteil aufnimmt.

Der Kern 20 ist aus einem anderen Material gefertigt als der Grundkörper 8. Vorteilhafterweise hat das Material des Kerns 20 einen kleineren Elastizitätsmodul (E-Modul oder auch Youngscher Modul) als das Material des Grundkörpers 8. Vorzugsweise wird für das Material des Kerns 20 ein Material mit einer im Vergleich zum Grundkörper 8 höheren Zähigkeit gewählt, welches bei Anliegen von verformenden Kräften, die beispielsweise über das Aufbauteil eingeleitet werden, nicht bricht sondern vielmehr zu fließen anfängt bzw. sich plastisch verformt und daher "nachgibt". Materialien mit hoher Zähigkeit können gegenüber Materialien mit niedriger Zähigkeit mehr Energie aufnehmen, bevor sie brechen. Als besonders vorteilhaft erweist sich, als Material für den Kern 20 das biokompatible PEEK (Polyetheretherketon) zu wählen.

Der Kern 20 kann mit dem Grundkörper 8 in stoffschlüssiger, formschlüssiger und/oder kraftschlüssiger Weise verbunden sein, insbesondere verklebt oder verpresst sein. Er kann auch durch ein Spritzgussverfahren in den Grundkörper eingespritzt bzw. an in angespritzt sein oder in ihn zementiert sein. Mit der Verwendung von PEEK als Prothethikwerkstoff kann zwischen Grundkörper 8 und Kern 20 ein dauerelastischer, bakterienresistenter und biokompatibler Werkstoffverbund realisiert werden.

Der Kern 20 dient im fertig zusammengesetzten Implantat als Stressabsorber, der zu einer verminderten Belastung des Grundkörpers 8 führt. Dies führt zu einer längeren Haltbarkeit des Dentalimplantats.

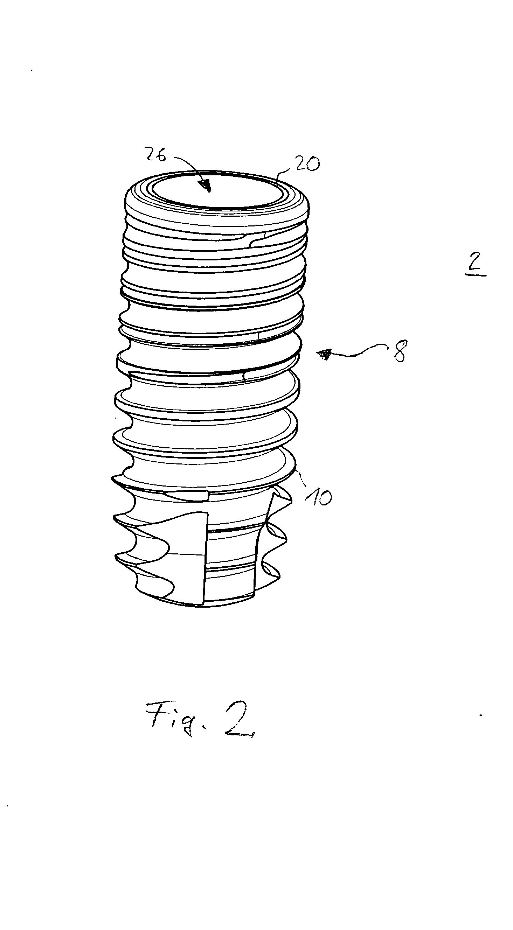

In Fig. 2 ist der Kern 20 in die Formausnehmung 14 des Grundkörpers 8 eingesetzt und durch eine der oben genannten Methoden mit ihm verbunden. In den Aufnahmekanal 26 kann das Aufbauteil (nicht dargestellt) eingeführt werden, welches mit dem Kern 20 beispielsweise durch Verkleben, Zementieren, adhäsives Befestigen, oder Verspritzen verbunden werden kann. Der Kern 20 kann auch mit einer Fixierschraube (nicht dargestellt) an dem Grundkörper 8 fixiert werden, d.h. mit ihm verschraubt werden. Dazu kann beispielsweise der untere Abschnitt 30 des Kerns 20 mit einem geeignet dimensionierten Innengewinde versehen sein. Das Innengewinde kann sich auch über die gesamte Längsausdehnung des Kerns 20 erstrecken.

Die Querschnittskontur des Kerns 20 kann in an sich bekannter Weise zumindest in einem Teilabschnitt geeignet gewählt sein, um eine Verdrehsicherung für das in den Aufnahmekanal 26 eingebrachte Aufbauteil zu gewährleisten (so genannte Indizierung).

### Bezugszeichenliste

- 2: Dentalimplantat
- 8: Grundkörper
- 10: Gewinde
- 14: Formausnehmung
- 20: Kern
- 26: Aufnahmekanal
- 30: unterer Abschnitt

## Patentansprüche

1. Dentalimplantat (2) mit einem Grundkörper (8), der aus einem ersten Material gefertigt ist, **gekennzeichnet durch** einen fest mit dem Grundkörper (8) verbundenen, zur Aufnahme eines zugehörigen Aufbauteils vorgesehenen Kern (20), der aus einem vom ersten Material verschiedenen zweiten Material besteht.

2. Dentalimplantat (2) nach Anspruch 1, wobei das zweite Material einen im Vergleich zum ersten Material geringeren Elastizitätsmodul aufweist.

3. Dentalimplantat (2) nach Anspruch 1 oder 2, wobei der Grundkörper (8) eine Formausnehmung (14) zur Aufnahme des Kerns (20) aufweist, und wobei der Kern (20) nach Art eines Adapters einen Aufnahmekanal (26) für ein zugeordnetes Aufbauteil bildet.

4. Dentalimplantat (2) nach einem der Ansprüche 1 bis 3, wobei das zweite Material metallfrei ist.

5. Dentalimplantat (2) nach einem der Ansprüche 1 bis 4, wobei das zweite Material PEEK ist.

6. Dentalimplantat (2) nach einem der Ansprüche 1 bis 5, wobei das erste Material Zirkon ist.

7. Dentalimplantat (2) nach einem der Ansprüche 1 bis 6, wobei der Kern (20) mit dem Grundkörper (8) verklebt und/oder verpresst ist.

8. Dentalimplantat (2) nach einem der Ansprüche 1 bis 6, wobei der Kern (20) durch ein Spritzgussverfahren an den Grundkörper (8) angespritzt oder in ihn eingespritzt ist.

9. Dentalimplantat (2) nach einem der vorherigen Ansprüche, das vollständig metallfrei ist

10. Implantatsystem mit einem Dentalimplantat (2) nach einem der vorherigen Ansprüche und mit einem Aufbauteil.

11. Implantatsystem nach Anspruch 10, das vollständig metallfrei ist.
